# EUROPÄISCHE PATENTSCHRIFT

(11) **EP 0 900 541 B1**
(45) Veröffentlichungstag und Bekanntmachung des Hinweises auf die Patenterteilung: **09.05.2001**
(21) Anmeldenummer: 98115205.1
(22) Anmeldetag: 13.08.1998
(51) Int. Cl.: A47J 31/043, A47J 31/36

(54) **Vorrichtung zur Herstellung von Aromaauszügen**
Device for preparing aromatic beverages
Dispositif pour préparer des boissons aromatiques

(30) Priorität: 04.09.1997 DE 29715881 U
(43) Veröffentlichungstag der Anmeldung: 10.03.1999
(73) Patentinhaber: MELITTA HAUSHALTSPRODUKTE GmbH & Co. Kommanditgesellschaft, D-32427 Minden (DE)
(72) Erfinder: Perkovic, Josip, 32425 Minden (DE); Sachtleben, Andreas, 32427 Minden (DE)
(74) Vertreter: Stracke, Alexander, Dipl.-Ing.

(56) Entgegenhaltungen:
- FR-A- 1 535 068
- FR-A- 2 646 335
- FR-E- 83 175
- US-A- 4 721 035

## Beschreibung

Die vorliegende Erfindung betrifft eine Vorrichtung zur Herstellung von Aromaauszügen gemäß dem Oberbegriff des Patentanspruches 1.

Eine derartige Vorrichtung ist beispielsweise aus der FR-A-26 46 335 bekannt. Bei der bekannten Konstruktion ist im Seitenwandbereich des Adapters eine Luftabsaugöffnung vorgesehen und an einem außen liegenden Anschlußstutzen kann eine Evakuierungseinrichtung, beispielsweise ein Pumpe, angeschlossen werden.

Auch aus der FR-A-15 35 068 ist eine derartige Vorrichtung bekannt, wobei auch hier die zur Unterdruckerzeugung benötigten Mittel außerhalb des Adapters liegen.

Der vorliegenden Erfindung liegt die Aufgabe zugrunde, eine Vorrichtung der gattungsgemäßen Art mit der Möglichkeit, den Filtrationsprozeß oder die Filtrationsdauer im Sinne einer Verkürzung zu beeinflussen, in kompakter Form zu realisieren.

Diese Aufgabe wird erfindungsgemäß gelöst durch die Merkmale des kennzeichnenden Teiles des Anspruches 1.

Durch die Evakuierungseinrichtung kann ein mehr oder minder starker Unterdruck im Aufnahmebehälter erzeugt werden, wodurch die im Filtergefäß befindliche Extraktionsflüssigkeit in den Aufnahmebehälter hineingesaugt wird. Dadurch wird der Filtrationsprozeß bzw. die Filtrationsdauer verkürzt, so daß der jeweilige Benutzer Einflußmöglichkeiten auf diese unter anderem für die Qualität des erzeugten Filtrates wichtigen Größen hat.

Da alle für die Evakuierungseinrichtung benötigten Bauteile innerhalb des Adapters angeordnet sind, ergibt sich dabei eine insgesamt kompakte Bauweise.

Weitere Merkmale der Erfindung sind Gegenstand von Unteransprüchen.

In den beigefügten Zeichnungen sind Ausführungsbeispiele der Erfindung dargestellt, die im folgenden näher beschrieben werden.

Es zeigen:
- Figur 1: einen Vertikalschnitt durch eine erfindungsgemäße Vorrichtung zur Herstellung von Aromaauszügen,
- Figur 2: einen schematisch dargestellten Vertikalschnitt durch eine Vorrichtung nach einem weiteren Ausführungsbeispiel der Erfindung,
- Figur 3: einen Vertikalschnitt durch eine Vorrichtung zur Herstellung von Aromaauszügen nach einem weiteren Ausführungsbeispiel der Erfindung.

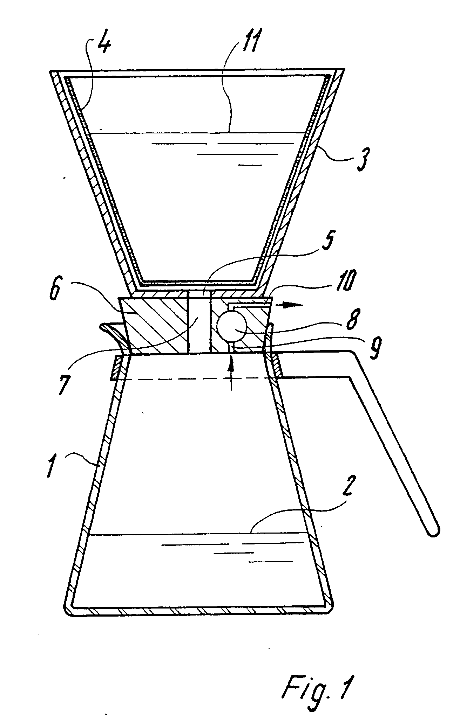

Die in den Figuren 1-3 gezeigten Vorrichtungen zur Herstellung von Aromaauszügen, insbesondere aus Kaffee oder Tee, weisen hinsichtlich ihrer wesentlichen Bestandteile grundsätzlich den gleichen Aufbau auf.

Jede Vorrichtung umfaßt einen Aufnahmebehälter 1 für ein fertiges Filtrat 2 sowie ein Filtergefäß 3, welches während des Filtrationsprozesses auf dem Aufnahmebehälter 1 aufsitzt.

In den dargestellten Ausführungsbeispielen sind die Filtergefäße 3 jeweils stumpfkegelartig ausgebildet und in jedes Filtergefäß 3 ist ein Filterpapiereinsatz 4 mit entsprechend angepaßter Formgebung eingesetzt.

Selbstverständlich kann das jeweilige Filtergefäß 3 formmäßig abweichend von den dargestellten Ausführungsbeispielen gestaltet sein, ebenso ist es denkbar, statt eines Filterpapiereinsatzes andere Filter wie beispielsweise Metallfilter oder dergleichen zu verwenden.

Jedes Filtergefäß 3 ist mit einer Auslauföffnung 5 versehen, durch welche das Filtrat 2 in den unterhalb des Filtergefäßes 3 angeordneten Aufnahmebehälter 1 fließen kann.

Beim Ausführungsbeispiel der Erfindung gemäß Figur 1 ist zwischen dem Aufnahmebehälter 1 und dem Filtergefäß 3 ein Adapter 6 vorgesehen, der aus einem elastischen Material besteht und hinsichtlich seiner Gestaltung so ausgebildet ist, daß er gewissermaßen als Stopfen abdichtend auf den oberen Randbereich des Aufnahmebehälters 1 aufsetzbar ist. Zu diesem Zweck ist der Adapter 6 beim Ausführungsbeispiel nach Figur 1 in seinem äußeren Randbereich leicht konisch ausgeführt. Der Adapter 6 ist mit einer zentralen Durchflußöffnung 7 ausgestattet, die unmittelbar unterhalb der Auslauföffnung 5 des Filtergefäßes 3 liegt, welches abdichtend auf den Adapter 6 aufgesetzt ist.

Innerhalb des Adapters 6 ist eine rein schematisch dargestellte Absaugpumpe 8 angeordnet, von der ausgehend ein Luftabsaugkanal 9 im oberen Randbereich des Aufnahmebehälters 1 in diesen einmündet.

Andererseits führt von der Absaugpumpe 8 ein Abluftkanal 10 innerhalb des Adapters 6 ins Freie.

Durch die Absaugpumpe 8, den Luftabsaugkanal 9 und den Abluftkanal 10 wird eine Evakuierungseinrichtung gebildet, mittels derer innerhalb des Aufnahmebehälters 1 bei aufgesetztem Adapter 6 und darauf luftdicht angeordnetem Filtergefäß 3 ein Unterdruck erzeugt werden kann. Durch diesen Unterdruck innerhalb des Aufnahmebehälters 1 wird im Filtergefäß 3 befindliche Filtrationsflüssigkeit 11 in den Aufnahmebehälter 1 angesaugt, wodurch die Filtrationsdauer im Sinne einer Verkürzung beeinflußt werden kann.

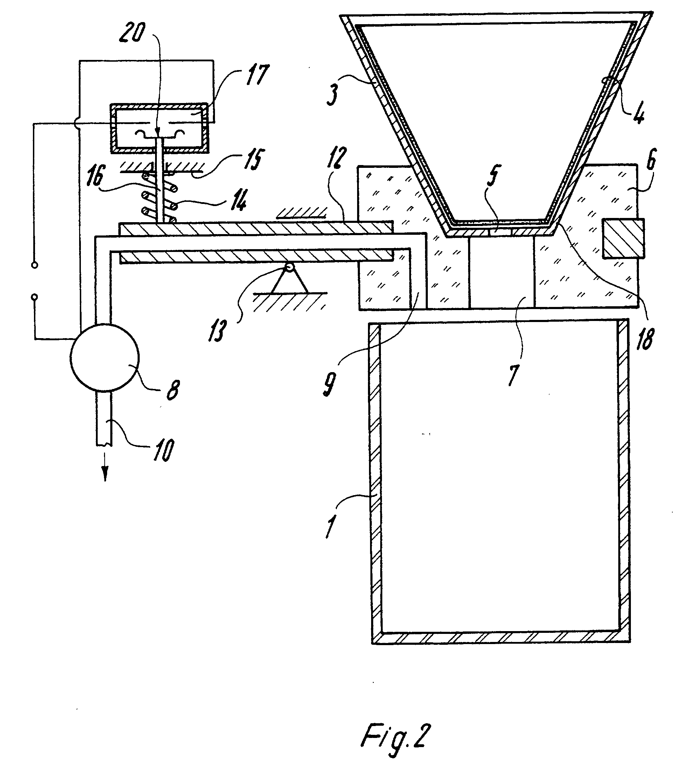

Beim Ausführungsbeispiel der Erfindung gemäß Figur 2 ist der Adapter 6 von einer Halterung 12 getragen, welche um ein Kipplager 13 schwenkbar angeordnet ist. Die Halterung 12 bildet einen zweiarmigen Hebel, wobei an einem Ende dieses zweiarmigen Hebels der schon erwähnte Adapter 6 angeordnet ist und am anderen Ende eine Feder 14 angreift, welche auf das dem Adapter 6 entgegengesetzt liegende Ende des zweiarmigen Hebels einwirkt. Diese Feder 14 ist an einem nicht weiter dargestellten, ortsfesten Gestellteil 15 abgestützt. Im Bereich dieser Feder 14 ist mit dem Halter 12 ein Schaltstößel 16 verbunden, der in einen Schalter 17 zum Einschalten der elektrisch betriebenen Saugpumpe 8 hineinragt.

Solange das Filtergefäß 3 nicht gefüllt und damit nicht belastet ist, wird die vorstehend beschriebene Konstruktion der Adapter 6 vom oberen Rand des Aufnahmebehälters 1 entfernt fixiert. Wird das Filtergefäß 3 mit einem Aromaträger und einer Filtrationsflüssigkeit gefüllt, so wird durch die entsprechende Belastung die als zweiarmiger Hebel ausgebildete Halterung 12 entgegen der Wirkung der Feder 14 derart verschwenkt, daß der Adapter 6 sich auf den oberen Rand des Aufnahmebehälters 1 auflegt. Der Adapter 6, der aus elastischem Material hergestellt ist, dichtet dabei den oberen Rand des Aufnahmebehälters 1 luftdicht ab.

Auf seiner Oberseite ist der Adapter 6 mit einer der Form des Filtergefäßes 3 angepaßten, stumpfkegelartigen Ausnehmung 18 versehen, in die das Filtergefäß 3 ebenfalls luftdicht abgeschlossen eingreift. Durch das Verschwenken des Adapters 6 in Richtung des Aufnahmebehälters 1 wird der auf dem gegenüberliegenden Ende der Halterung 12 befestigte Stößel 16 weiter in den Schalter 17 hineinbewegt, so daß nun ein Kontakt 20 dieses Schalters 17 geschlossen und die Absaugpumpe 8 eingeschaltet wird.

Es wird nun wieder ein Unterdruck im Aufnahmebehälter 1 erzeugt und der Filtrationsprozeß bzw. die Filtrationsdauer zeitlich verkürzt.

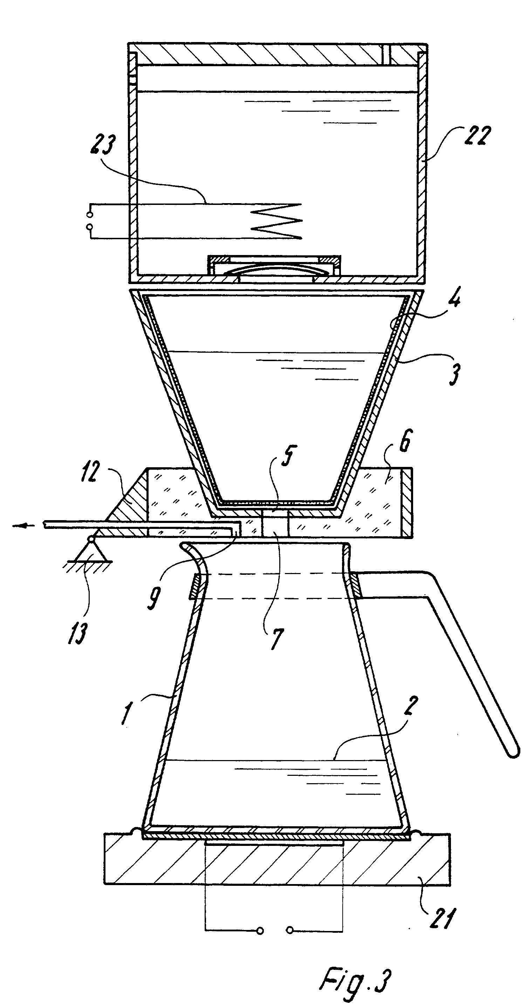

Beim Ausführungsbeispiel gemäß Figur 3 ist der Adapter 6 ebenfalls in einer um ein Schwenklager 13 verschenkbaren Halterung 12 angeordnet und kann ähnlich wie beim Ausführungsbeispiel gemäß Figur 12 auf den Aufnahmebehälter 1 aufgepreßt oder von diesem Aufnahmebehälter 1 abgehoben werden. In Figur 3 ist auf die Darstellung einer Absaugpumpe zur Erzeugung eines Unterdruckes innerhalb des Aufnahmebehälters 1 aus Gründen der Übersichtlichkeit verzichtet worden. Diesbezüglich ist die Wikung der in Figur 3 gezeigten Konstruktion die gleiche wie beim Ausführungsbeispiel nach Figur 2.

Die Figur 3 macht darüber hinaus deutlich, daß der Aufnahmebehälter 1 in üblicher Weise auf einer Warmhalteplatte 21 abgestellt sein kann, um das im Aufnahmebehälter 1 gesammelte Filtrat 2 über einen längeren Zeitraum warmhalten zu können.

Eine weitere Abweichung beim Ausführungsbeispiel gemäß Figur 3 besteht darin, daß oberhalb des Filtergefäßes 3 ein Wasserbehälter 22 mit einer Heizeinrichtung 23 angeordnet ist, innerhalb dessen das für die Herstellung eines Aromaauszuges aus Kaffee oder Tee benötigte heiße Wasser erzeugt werden kann.

Die Darstellungen in den Figuren 2 und 3 sind im übrigen rein schematisch zu verstehen, wobei es für einen Fachmann keine Schwierigkeit bedeutet sich vorzustellen, daß die gesamte Anordnung in einer eine Einheit bildenden Kaffee-oder Teemaschine angeordnet sein kann.

## Patentansprüche

1. Vorrichtung zur Herstellung von Aromaauszügen, insbesondere aus Kaffee oder Tee, umfassend einen Aufnahmebehälter (1) für das fertige Filtrat (2) und ein Filtergefäß (3) mit einer Auslauföffnung (5), wobei das Filtergefäß (3) während des Filtrationsprozesses auf dem Aufnahmebehälter (1) aufsitzt und der Auflagebereich zwischen Filtergefäß (3) und Aufnahmebehälter (1) luftdicht abgeschlossen ist und im oberen Randbereich des Aufnahmebehälters (1) ein Luftabsaugkanal (9) einer Evakuierungseinrichtung in den Aufnahmebehälter (1) einmündet und mittels der Evakuierungseinrichtung ein Unterdruck im Aufnahmebehälter (1) erzeugbar ist, wobei zwischen dem Aufnahmebehälter (1) und dem Filtergefäß (3) ein die Abdichtung bewirkender Adapter (6) angeordnet ist, innerhalb dessen zumindest ein Teil des Luftabsaugkanales (9) verläuft, welch Letzterer an einer Absaugpumpe (8) angeschlossen ist, **dadurch gekennzeichnet**, daß die Absaugpumpe (8) innerhalb des Adapters (6) liegt.

2. Vorrichtung nach Anspruch 1, **dadurch gekennzeichnet**, daß der Adapter (6) im wesentlichen aus einem aus elastischem Kunststoff, Gummi oder dergleichen hergestellten Zwischenstück besteht, welches mit seiner Unterseite dicht schließend auf dem Aufnahmebehälter (1) aufliegt und auf dessen Oberseite das Filtergefäß (3) dich schließend aufsitzt.

3. Vorrichtung nach Anspruch 1 oder 2, **dadurch gekennzeichnet**, daß der Adapter (6) von einer als zweiarmiger Hebel ausgebildeten Halterung (12) getragen ist, die um ein Kipplager (13) verschwenkbar und von einer ortsfest abgestützten Feder (14) in einer Nichtgebrauchsstellung fixiert ist.

4. Vorrichtung nach Anspruch 3, **dadurch gekennzeichnet**, daß an der dem Adapter (6) abgewandt liegenden Seite der Halterung (12) ein Stößel (16) befestigt ist, der in einen Schalter (17) zum Ein- oder Ausschalten der Absaugpumpe (8) vorgesehen ist, wobei der besagte Stößel (16) bei Belastung des Filtergefäßes (3) insbesondere durch Filtrationsflüssigkeit in Einschaltstellung in den Schalter (17) eingedrückt ist.

5. Vorrichtung nach einem oder mehreren der vorhergehenden Ansprüche, **dadurch gekennzeichnet**, daß als Abstellfläche für den Aufnahmebehälter (1) in an sich bekannter Weise eine Warmhalteplatte (21) vorgesehen ist.

6. Vorrichtung nach einem oder mehreren der vorhergehenden Ansprüche, **dadurch gekennzeichnet**, daß oberhalb des Filtergefäßes (3) ein Flüssigkeitsbehälter (22) mit einer Heizeinrichtung (23) zur Erzeugung von für einen Filtrationsprozeß benötigtem Heißwasser angeordnet ist.

## Claims

1. Device for production of aromatic extracts especially of coffee or tea, comprising a receiving container (1) for the prepared filtrate (2) and a filter vessel (3) with an outlet opening (5), wherein the filter vessel (3) sits on the receiving container (1) during the filtration process and the contact region between filter vessel (3) and receiving container (1) is hermetically sealed and an air suction channel (9) of an evacuating device opens into the receiving container (1) in the upper edge region of the receiving container (1) and an underpressure is producible in the receiving container (1) by means of the evacuating device, wherein arranged between the receiving container (1) and the filter vessel (3) is an adapter (6) which acts as a seal and within which at least a part of the air suction channel (9) extends, which latter is connected to a suction pump (8), characterised in that the suction pump (8) lies within the adapter (6).

2. Device according to claim 1, characterised in that the adapter (6) substantially consists of an elastic synthetic material, rubber or similarly produced intermediate member, which sealing rests by its underside on the receiving container (1) and on the upper side of which the filter vessel (3) is sealingly seated.

3. Device according to claim 1 or 2, characterised in that the adapter (6) is carried by a mount (12) which is constructed as a double-armed lever and which is pivotable about a pivot bearing (13) and fixed in a non-use setting by a spring (14) supported in fixed location.

4. Device according to claim 3, characterised in that fastened to the side of the mount (12) remote from the adapter (6) is a plunger (16) which is provided in a switch (17) for the switching-on or switching-off of the suction pump (8), wherein the said plunger (16) is urged into the switching-on setting in the switch (17) on loading of the filter vessel (3), particularly by filtration liquid.

5. Device according to one or more of the preceding claims, characterised in that a plate (21) for keeping warm is provided in per se known manner as support surface for the receiving container (1).

6. Device according to one or more of the preceding claims, characterised in that a liquid container (22) with a heating device (23) for producing hot water needed for a filtration process is arranged above the filter vessel (3).

## Revendications

1. Dispositif pour préparer des boissons aromatiques, en particulier à base de café ou de thé, dans lequel :
- un récipient de réception (1) sert à recueillir le filtrat (2) produit, et un récipient de filtre (3) avec une ouverture de sortie (5) est posé sur le récipient de réception (1) pendant la filtration, avec étanchéité à l'air assurée le long de la zone d'appui du récipient de filtre (3) sur le récipient de réception (1),
- vers le haut du récipient de réception (1) débouche dans celui-ci un canal d'aspiration d'air (9) d'un dispositif d'évacuation qui permet de créer une dépression dans le récipient de réception (1), et
- entre le récipient de réception (1) et le récipient de filtre (2) est monté un adaptateur (6) formant joint d'étanchéité et à l'intérieur duquel passe au moins une partie du canal d'aspiration d'air (9) qui est lui-même relié à une pompe d'aspiration (8),
caractérisé en ce que
la pompe d'aspiration (8) se trouve à l'intérieur de l'adaptateur (6).

2. Dispositif selon la revendication 1,
caractérisé en ce que
l'adaptateur (6) est une pièce intermédiaire en matière plastique élastique, en caoutchouc ou similaire, qui est appliqué par sa face inférieure, avec étanchéité sur le récipient de réception (1) tandis que sur sa face supérieure, le récipient de filtre (3) est posé avec étanchéité.

3. Dispositif selon la revendication 1 ou 2,
caractérisé en ce que
l'adaptateur (6) est porté par un support (12) constitué par un levier à deux bras, pouvant basculer autour d'un palier de basculement (13) et être fixé, en position de non-utilisation, par un ressort (14)en appui sur un point fixe.

4. Dispositif selon la revendication 3,
caractérisé en ce que
sur le côté du support (12) éloigné de l'adaptateur (6), est fixé un poussoir (16) prévu dans un contacteur (17) servant à enclencher ou arrêter la pompe d'aspiration (8), et ce poussoir (16), lorsque le récipient de filtre (3) est chargé en particulier par le liquide de filtration, est poussé à l'intérieur du contacteur (17), en position d'enclenchement.

5. Dispositif selon une ou plusieurs des revendications précédentes,
caractérisé en ce que
de manière connue, il est prévu une plaque de maintien de température (21) sur laquelle est posé le récipient de réception (1).

6. Dispositif selon une ou plusieurs des revendications précédentes,
caractérisé en ce qu'
au-dessus du récipient de filtre (3) est monté un réservoir de liquide (22) équipé d'un dispositif de chauffage (23), pour produire l'eau chaude nécessaire au processus de filtration.
